# EUROPÄISCHE PATENTSCHRIFT

(11) **EP 3 148 945 B1**
(45) Veröffentlichungstag und Bekanntmachung des Hinweises auf die Patenterteilung: **29.08.2018**
(21) Anmeldenummer: 15722927.9
(22) Anmeldetag: 30.04.2015
(51) Int. Cl.: C03B 23/03, G06F 3/0488, B60K 37/06, B60K 35/00, G06F 3/041

(54) **BEDIENELEMENT FÜR EIN KRAFTFAHRZEUG UND VERFAHREN ZUM HERSTELLEN EINER GLASPLATTE FÜR EIN BERÜHRSENSITIVES BEDIENELEMENT**
OPERATING ELEMENT FOR A MOTOR VEHICLE, AND METHOD FOR PRODUCING A GLASS PANEL FOR A TOUCH-SENSITIVE OPERATING ELEMENT
ÉLÉMENT DE COMMANDE POUR UN VÉHICULE À MOTEUR ET PROCÉDÉ DE FABRICATION D'UNE PLAQUE DE VERRE POUR UN ÉLÉMENT DE COMMANDE TACTILE

(30) Priorität: 30.05.2014 DE 102014008200
(43) Veröffentlichungstag der Anmeldung: 05.04.2017
(73) Patentinhaber: Audi AG, 85045 Ingolstadt (DE)
(72) Erfinder: WACHINGER, Michael, 86571 Winkelhausen (DE)
(74) Vertreter: Brandt, Kai
(86) Internationale Anmeldenummer: PCT/EP2015/000887
(87) Internationale Veröffentlichungsnummer: WO 2015/180816

(56) Entgegenhaltungen:
- WO-A1-2007/073902
- WO-A1-2015/055371
- WO-A2-2014/060108
- US-A- 2 610 444
- US-A1- 2014 354 587
- US-B1- 6 379 777

## Beschreibung

Die Erfindung geht aus von einem Bedienelement für ein Kraftfahrzeug, wobei das Bedienelement eine berührsensitive Bedienoberfläche aufweist, die durch eine Oberfläche einer Glasplatte bereitgestellt ist. Die Oberfläche der Glasplatte weist zudem eine Oberflächenstruktur auf, die durch Tiefziehen der Oberfläche im erwärmten Zustand der Glasplatte ausgebildet ist. Weiterhin geht die Erfindung aus von einem Verfahren zum Herstellen einer Glasplatte für ein berührsensitives Bedienelement. Dabei wird eine Glasplatte und ein Tiefziehwerkzeug mit einem ersten Werkzeugteil und einem zweiten Werkzeugteil bereitgestellt, die Glasplatte in das Tiefziehwerkzeug zwischen das erste Werkzeugteil und das zweite Werkzeugteil eingebracht und eine Oberflächenstruktur einer ersten Oberfläche der Glasplatte durch Tiefziehen der Glasplatte im erwärmten Zustand der Glasplatte mittels des Tiefziehwerkzeugs eingebracht, wobei die erste Oberfläche der Glasplatte eine berührsensitive Bedienoberfläche des Bedienelements zur Bedienung des Bedienelements bereitstellt.

Aus dem Stand der Technik sind berührsensitive Bedienelemente, wie z.B. Touchpads und Touchscreens, bekannt, die als Bedienoberfläche eine Glasplatte aufweisen können. Derartige Glasplatten sollen dabei möglichst hart und kratzfest sein, was beispielsweise durch bestimmte Glaszusammensetzungen und Härtungsverfahren ermöglicht wird.

Beispielsweise beschreibt die DE 11 2010 004 720 T5 eine Glaszusammensetzung, die eine hohe Festigkeit, Bruchzähigkeit und eine hohe Kratzfestigkeit aufweisen soll. Aus diesem Glas können durch Floaten oder einen Tiefziehprozess Glasplatten hergestellt werden, die sich insbesondere für Touchscreens eignen.

Weiterhin beschreibt die US 2013/0189486 A1 eine Glaszusammensetzung, die zum schnellen 3D-Pressformen und zur Härtung geeignet ist, um damit ebenfalls eine große Härte, Kratzresistenz und eine hohe Bruchfestigkeit bereitstellen zu können, insbesondere für ebene und nicht ebene bzw. gebogene Touchscreenoberflächen. Dabei können auch Oberflächenstrukturen während des Pressformens erzeugt werden, die einen dekorativen Effekt haben oder eine optische Funktion.

Bei berührsensitiven Bedienelementen spielen jedoch nicht nur die Robustheit und Optik der Bedienoberfläche eine Rolle, sondern auch der Bedienkomfort, der mit solchen Bedienelementen bereitgestellt werden soll, um z.B. eine möglichst einfache und angenehme Bedienung zu ermöglichen.

Unter diesem Aspekt schlägt die DE 10 2012 020 609 A1 beispielsweise ein gattungsgemäßes Bedienelement und Verfahren vor, bei dem durch Tiefziehen einer erwärmten Glasoberfläche für einen Touchscreen eine dreidimensionale, erfühlbare Struktur auf der Glasoberfläche erzeugt wird. Diese Strukturelemente dienen dabei zum Unterteilen der Bedienoberfläche in unterschiedliche und durch einen Benutzer erfühlbare Segmente, so dass ein Benutzer beispielsweise einen bestimmten Bedienbereich durch die hervorgehobenen Strukturelemente erfühlen kann, ohne seinen Blick auf den Touchscreen wenden zu müssen. Verbesserte und erleichternden Bedienmöglichkeiten eines Bedienelements wirken sich somit auch positiv auf die Sicherheit im Straßenverkehr aus.

Die WO 2014 060 108 A2 offenbart dabei ein Bedienelement für einen Kraftwagen, mit einer Bedienoberfläche, welche zumindest ein von einem Benutzer ertastbares Oberflächenstrukturelement aufweist, und wobei die Bedienoberfläche aus Glas ausgebildet ist. Verschiedene Oberflächenstrukturen können dabei unterschiedliche Höhen und unterschiedliche Oberflächenbeschaffenheiten, wie beispielsweise Riffelungen, Narbungen, Symboliken oder dergleichen, aufweisen, um dem Benutzer des Bedienelements weitere haptische Hinweise zu geben, die ihm die Bedienung erleichtern. Die Narbung kann dabei auch auf der gesamten Oberfläche des Bedienelements vorgesehen sein.

Aufgabe der vorliegenden Erfindung ist es, ein Bedienelement für ein Kraftfahrzeug, sowie ein Verfahren zum Herstellen einer Glassplatte für ein berührsensitives Bedienelement für ein Kraftfahrzeug anzugeben, die eine weitere Steigerung des Benutzungs- und Bedienkomforts durch das Bedienelement ermöglichen.

Diese Aufgabe wird gelöst durch ein Bedienelement für ein Kraftfahrzeug und ein Verfahren zum Herstellen einer Glasplatte für ein berührsensitives Bedienelement gemäß den unabhängigen Ansprüchen. Vorteilhafte Ausgestaltungen der Erfindung finden sich in den abhängigen Ansprüchen.

Das erfindungsgemäße Bedienelement zeichnet sich dadurch aus, dass die Oberflächenstruktur wellenförmig ausgebildet ist und zumindest ein gesamter berührbarer Teil der Oberfläche der Glasplatte mit der Oberflächenstruktur ausgebildet ist, wobei die Oberflächenstruktur als Mikrostruktur ausgebildet ist, wobei die Oberflächenstruktur Erhöhungen und Vertiefungen aufweist, wobei der Abstand zwischen jeweils zwei nächstliegenden Erhöhungen und zwischen jeweils zwei nächstliegenden Vertiefungen jeweils zwischen 80 und 130 Mikrometern bemisst, und wobei die Oberflächenstruktur derart ausgebildet ist, dass die Strukturhöhe zwischen 5 und 20 Mikrometer bemisst. Insbesondere kann dabei auch die gesamte Oberfläche einer Seite der Glasplatte mit einer Oberflächenstruktur ausgebildet sein. Die Erfindung beruht dabei auf der Erkenntnis, dass sich Vorteile in Bezug auf die Benutzerfreundlichkeit und insbesondere auf die Haptik eines Bediengeräts nicht nur durch makroskopische, erfühlbare Strukturen der Oberfläche erzielen lassen, sondern auch durch eine flächendeckende Ausbildung einer wellenförmigen Oberflächenstruktur, wie z.B. durch eine Fein- oder Mikrostrukturierung der Oberfläche. Insbesondere werden diese Vorteile dadurch erzielt, dass durch diese erfindungsgemäße Ausgestaltung der Oberfläche der Glasplatte, die berührbare Oberfläche keinerlei ebene Flächenabschnitte aufweist. Dadurch lassen sich die Gleiteigenschaften der Oberfläche enorm verbessern, denn ebene Glasoberflächen weisen im Vergleich zu einer unebenen, wellenförmig strukturierten Oberfläche einen sehr hohen Haftreibungswert auf. Hohe Haftreibungswerte äußern sich bei der Bedienung insbesondere dadurch, dass bei einer Richtungsumkehr einer berührenden Bedienbewegung oder auch bei einem kurzzeitigen Verweilen eines Fingers auf der Oberfläche zunächst ein hoher Widerstand zu verspüren ist bis sich die gewünschte Bewegung ausführen lässt, was sich nachteilig auf den Bedienkomfort berührsensitiver Bedienelemente wie Touchscreens oder Touchpads auswirkt und sehr leicht zu Fehlbedienungen führen kann. Eine wellenförmig strukturierte Oberfläche gewährleistet dagegen auf der gesamten berührbaren Oberfläche der Glasplatte kontrollierte berührende Bewegungen und erleichtert somit auf besonders vorteilhafte Weise die Bedienung. Auch lassen sich durch die Erfindung Vorteile in Bezug auf Gleitgeräusche erzielen, da die Oberflächenstruktur auch Auswirkungen auf die Akustik solcher Gleitgeräusche hat. Durch die Aufrauung der Oberfläche, bedingt durch die wellenförmige Oberflächenstruktur, lässt sich nämlich vorteilhafterweise auch eine akustische Dämpfung, insbesondere von hohen Frequenzen, bewerkstelligen, so dass z.B. unangenehme Quietsch- und Kratzgeräusche, wie diese bei ebenen, glatten Glasoberflächen oft auftreten, vermieden werden können. Darüber hinaus lässt sich auch durch die Erfindung die Sichtbarkeit von Verschmutzungen auf der Oberfläche, wie z.B. Fingerabdrücke, Fingerfett, usw., enorm reduzieren. Dies ist zum einen dadurch bedingt, dass durch die wellenförmige Oberflächenstruktur ein Finger nicht vollflächig auf der Oberfläche aufliegt wird, zum anderen aber vor allem durch die durch die Wellenstruktur bedingte ungerichtete Lichtreflexion, im Gegensatz zu glatten Oberflächen. Unter einem bestimmten Blickwinkel ist somit nur ein geringer Bruchteil an Verschmutzungen auf der Oberfläche überhaupt sichtbar. Dies ist besonders im Fall der Ausbildung des Bedienelements als Touchscreen von Vorteil, da dies eine deutlich bessere Erkennbarkeit von Darstellungen und Anzeigen auf dem Touchscreen ermöglicht. Zur besseren Erkennbarkeit von durch die Glasplatte angezeigten Darstellungen und Anzeigen trägt jedoch noch ein anderer Effekt, der sich durch die Erfindung erzielen lässt, bei. Durch die wellenförmige Oberflächenstruktur kann die Auskoppeleffizienz von in die Glasplatte eingestrahltem Licht gesteigert werden, so dass sich insgesamt der Transmissionsgrad der Glasplatte von Licht und damit von durch die Glasplatte angezeigten Darstellungen des Bedienelements steigern lässt.

Darüber hinaus können Glasplatten für berührsensitive Bedienelemente für Kraftfahrzeuge mit einer semitransparenten Farbbeschichtung versehen werden, um das Farberscheinungsbild des Bedienelements mit der Farbgestaltung des Fahrzeuginnenraums abzustimmen. Durch die Erfindung lassen sich nun bedingt durch die Wellenstruktur die optischen Eigenschaften der Glasplatte derart ändern, dass eine solche Beschichtung in ihrer Farbe deutlich intensiver und damit dunkler wahrgenommen wird. Dies führt wiederum dazu, dass als Beschichtung deutlich hellere Farbtöne, und damit Beschichtungen mit höherer Lichttransparenz verwendet werden können. Dies trägt damit zusätzlich noch zu einem höheren Transmissionsgrad der Glasplatte bei und ermöglicht somit eine deutlichere, klarere und vor allem lichtintensivere Anzeige von Darstellungen auf dem Bedienelement. Darüber hinaus lassen sich durch die Erfindung auch Verbesserungen hinsichtlich der thermischen Eigenschaften der Glasplatte erzielen. Durch die durch die wellenförmige Oberflächenstruktur bedingte vergrößerte Oberfläche der Glasplatte ist die Wärmeauskopplung der Glasplatte verbessert und die Wärme des Bedienelements kann so besser an die Umgebung abgeführt werden, was sich in einer für einen Benutzer deutlich kühler und damit angenehmer empfundenen Bedienoberfläche äußert und zudem auch einen positiven Effekt hinsichtlich der Verringerung einer zu starken Erhitzung des Bediengeräts selbst mit sich bringt. Darüber hinaus ist durch die wellenförmige Oberflächenstruktur beim Berühren der Oberfläche durch einen Finger die Auflagefläche des Fingers gegenüber einer ebenen Oberfläche vermindert, so dass durch die verminderte Auflagefläche bei einem Bewegen des Fingers weniger Reibung entsteht und auch weniger Reibungswärme auf die Glasplatte übertragen wird. Auch dadurch lässt sich die Erwärmung der Glasplatte durch die Benutzung des Bedienelements vorteilhafterweise reduzieren. Somit lassen sich insgesamt durch die Erfindung signifikante Vorteile hinsichtlich der Bereitstellung eines möglichst hohen Benutzungs- und Bedienkomforts erzielen.

Erfindungsgemäß ist die Oberflächenstruktur als Mikrostruktur ausgebildet. Die wellenförmige Oberflächenstruktur soll also somit durch Wellenlängen der Wellenstruktur charakterisiert sein, die deutlich kleiner sind als 1 mm. Durch eine derartig feine Struktur kann es auf vorteilhafte Weise bewerkstelligt werden, dass die durch die wellenförmige Oberflächenstruktur bedingten unterschiedlichen Oberflächenkrümmungen keine optisch wahrnehmbare Verzerrung einer durch die Glasplatte angezeigten Darstellung nach sich zieht. Zudem lässt sich durch eine derartig feine Strukturierung ein besonders angenehmes Bedienempfinden bereitstellen und zudem die oben genannten Vorteile besonders effektiv umsetzen. Darüber hinaus ist durch die Ausbildung der Oberflächenstruktur mittels eines Tiefziehprozesses auf besonders vorteilhafte Weise die Möglichkeit bereitgestellt eine derartig feine Struktur auch umzusetzen. Gerade bei der Ausbildung einer Glasplatte mit einer solch feinen Strukturierung ist die Ausbildung der Oberflächenstruktur durch einen Tiefziehprozess besonders vorteilhaft. Im Gegensatz zu einer direkten Bearbeitung der Glasoberfläche lässt sich zum einen die Obenflächenstruktur sehr schonend generieren, ohne dabei die Glasplatte zu beanspruchen oder zu beschädigen. Zum anderen kann dabei auch die Erkenntnis genutzt werden, dass sich eine feine Strukturierung auf besonders einfache Weise dadurch umsetzen lässt, dass ein entsprechendes Muster in ein Werkzeugteil des Tiefziehwerkzeugs, z.B. mittels CNC-Fräsen, eingebracht werden kann, das sich beim Tiefziehen auf die Oberfläche einer Seite der Glasplatte überträgt, und sich auf diese Weise beliebig feine Strukturen in das Werkzeugteil und damit in die Glasoberfläche einbringen lassen.

Eine wellenförmige Mikrostruktur ist auf vorteilhafte Weise dadurch umgesetzt, dass die Oberflächenstruktur Erhöhungen und Vertiefungen aufweist, wobei der Abstand zwischen jeweils zwei nächstliegenden Erhöhungen und zwischen jeweils zwei nächstliegenden Vertiefungen zwischen 80 und 130 Mikrometern bemisst. Durch eine wellenförmige Oberflächenstruktur auf dieser kleinen Längenskala lässt sich makroskopisch eine besonders homogene Haptik und Optik der Glasoberfläche erreichen und zudem die Eigenschaften der Glasoberfläche in Bezug auf Gleitfähigkeit, Gleitgeräusche Sichtbarkeit von Verschmutzungen und Transmissionsgrad optimieren. Insbesondere lässt sich diese Optimierung erst in Kombination damit bereitstellen, dass die Oberflächenstruktur derart ausgebildet ist, dass die Strukturhöhe der Oberflächenstruktur zwischen 5 und 20 Mikrometer bemisst. Unter Strukturhöhe wird dabei der Höhenunterschied zwischen einer Erhöhung und einer Vertiefung der Oberflächenstruktur verstanden, bezogen auf eine Referenzebene, die parallel zur makroskopischen Erstreckung der Glasoberfläche verläuft. Die Strukturhöhe ist damit um eine Größenordnung kleiner als die Strukturbreite, wodurch eine sehr geringe lokale Oberflächenkrümmung bereitgestellt wird. Damit lässt sich vermeiden, dass die wellige Struktur für einen Benutzer auf unangenehme und markante Weise, oder überhaupt spürbar ist. Zudem lässt sich eine derart geringe Strukturhöhe besonders einfach und schnell mittels Tiefziehen der Oberfläche umsetzen, da nur eine geringe Formänderung in Richtung senkrecht zur Glasplatte erzielt werden muss. Durch die geringe Oberflächenkrümmung kann zudem gewährleistet werden, dass es durch die Oberflächenstruktur nicht zu optischen Verzerrungen von durch die Glasplatte angezeigten Darstellungen kommt. Weiterhin ist die Oberflächenstruktur an sich für einen Benutzer optisch nicht wahrnehmbar.

Bei einer weiteren vorteilhaften Ausgestaltung der Erfindung sind die Erhöhungen und Vertiefungen jeweils langgestreckt in einer Längserstreckungsrichtung ausgebildet, insbesondere so, dass Höhenlinien der Oberflächenstruktur zum Großteil in eine gleiche Richtung verlaufen. Dies kann beispielsweise dadurch umgesetzt werden, indem in das Tiefziehwerkzeugteil ein Muster eingebracht wird, dass aus parallel verlaufenden Rillen besteht. Diese Rillen können auf besonders einfache Weise in das Werkzeugteil eingefräst werden, wodurch sich die Herstellung einer solchen Glasplatte mit einer wellenförmigen, insbesondere periodischen Mikrostruktur als besonders einfach und kostengünstig erweist.

Besonders vorteilhaft ist es jedoch, wenn die Erhöhungen und Vertiefungen rasterförmig angeordnet sind, so dass eine Erhöhung von vier Vertiefungen umgeben ist und umgekehrt, insbesondere so, dass Höhenlinien der Oberflächenstruktur zum Großteil in einer geschlossen, insbesondere kreisförmigen oder elliptischen, Linie verlaufen. Dies kann herstellungstechnisch ebenfalls sehr einfach umgesetzt werden, indem zusätzlich zu den in die erste Richtung verlaufenden ersten Rillen in das Werkzeugteil weitere zweite Rillen eingefräst werden, die senkrecht, oder zumindest in einem Bereich zwischen 85° und 95° zu den ersten Rillen verlaufen. Dadurch ergibt sich ein Kreuzmuster an Rillen, dass beim Tiefziehen derart auf die Glasoberfläche übertragen wird, dass sich das beschriebene Raster an Erhöhungen und Vertiefungen ergibt. Eine derartige Kreuzstruktur hat dabei, insbesondere in Kombination mit den oben genannten Abmessungen der Struktur, den Vorteil, dass die Oberflächenstruktur damit keine Vorzugsrichtung aufweist. Bezüglich der haptischen als auch optischen, thermischen und akustischen Eigenschaften der Oberfläche kann so ein besonders hohes Maß an Homogenität über die gesamte Oberfläche hinweg erreicht werden.

Das erfindungsgemäße Verfahren zum Herstellen einer Glasplatte zeichnet sich dadurch aus, dass beim Bereitstellen eines Tiefziehwerkzeugs ein solches Tiefziehwerkzeug bereitgestellt wird, dessen erster Werkzeugteil ein Muster aufweist, das zumindest durch Einbringen von mehreren, rillenförmigen ersten Vertiefungen gebildet ist. Weiterhin wird die Glasplatte derart in das Tiefziehwerkzeug zwischen das erste und das zweite Werkzeugteil eingebracht, dass beim Tiefziehen der Glasplatte das Muster als eine wellenförmige Oberflächenstruktur auf die erste Oberfläche der Glasplatte übertragen wird, wobei Oberflächenstruktur als Mikrostruktur ausgebildet ist, wobei die Oberflächenstruktur Erhöhungen und Vertiefungen aufweist, wobei der Abstand zwischen jeweils zwei nächstliegenden Erhöhungen und zwischen jeweils zwei nächstliegenden Vertiefungen jeweils zwischen 80 und 130 Mikrometern bemisst, und wobei die Oberflächenstruktur derart ausgebildet ist, dass die Strukturhöhe zwischen 5 und 20 Mikrometer bemisst.

Das Verfahren ist damit zum Herstellen einer Glasplatte eines erfindungsgemäßen Bedienelements ausgelegt, insbesondere auf besonders kostengünstige und effiziente Weise. Das Einbringen des Musters kann dabei beispielsweise mittels Fräsen, insbesondere CNC-Fräsen erfolgen, um beliebig kleine Mikrostrukturen auf einfache Weise auf die Glasplatte übertragen zu können. Zudem ist es auf diese Weise besonders einfach die gesamte Oberfläche einer Seite der Glasplatte mit einer Oberflächenstruktur zu versehen. Der Gestaltung dieser Mikrostrukturen sind auf diese Weise keine Grenzen gesetzt, jedoch zeichnen sich Rillenmuster durch ihre besonders einfache und effektive Umsetzung aus, und besonders ein Muster mit diagonaler Kreuzstruktur mit dem Effekt einer zusätzlichen Optimierung und Homogenisierung der haptische, optischen, thermischen und akustischen Eigenschaften der resultierenden Glasplatte ist damit besonders vorteilhaft.

Daher sind bei einer vorteilhafte Ausgestaltung der Erfindung die ersten Vertiefungen in eine erste Richtung verlaufend in den ersten Werkzeugteil und in einer zweiten Richtung senkrecht zur ersten Richtung aneinandergrenzend eingebracht, wobei eine jeweilige erste Vertiefung in der zweiten Richtung eine Breite aufweist, die kleiner ist als 130 Mikrometer. Auf diese Weise lässt sich die Mikrostruktur einfach erzeugen, die letztendlich auf die Glasplatte übertragen wird. Die Breiten derartiger Rillen lassen sich dabei auf einfache Weise durch Einstellen der Fräsparameter wie Fräsabstand und Fräsradius vorgeben. Zudem lassen sich durch diese Parameter auch auf einfache Weise die resultierende Strukturhöhe der Oberflächenstruktur der Glasplatte vorgeben.

Besonders vorteilhaft ist es, wenn das Muster des ersten Werkzeugteils zusätzlich durch Einbringen mehrerer in einer dritten Richtung verlaufenden, rillenförmigen zweiten Vertiefungen gebildet ist, wobei die dritte Richtung in einem Winkel ungleich Null, und bevorzugt senkrecht oder zumindest 85° bis 95°, zur ersten Richtung verläuft. Mit anderen Worten wird somit eine Kreuzstruktur in das Werkzeugteil eingebracht, die sich dann in der kreuzstrukturartigen Anordnung der Erhöhungen und Vertiefungen der Glasoberfläche niederschlägt.

Des Weiteren kann das Tiefziehen derart erfolgen, dass eine der ersten Oberfläche gegenüberliegende zweite Oberfläche der Glasplatte eben ausgebildet wird. Damit wird nur eine Seite der Glasplatte mit einer wellenförmigen Oberflächenstruktur versehen, was insbesondere in Bezug auf die Sensorik für das berührsensitive Bedienelement, noch vorzusehende Beschichtungen und auch in Bezug auf die Stabilität der Glasplatte besonders vorteilhaft ist.

Darüber hinaus kann die Glasplatte noch weiteren Bearbeitungsschritten unterzogen werden. Insbesondere kann in einem, z.B. finalen, Bearbeitungsschritt die Seite der Glasplatte mit der Oberflächenstruktur noch einem Ätzprozess unterzogen werden. Durch den Ätzprozess kann z.B. eine Abrundung von möglichen Kanten der Oberflächenstruktur durch Ätzen bewerkstelligt werden. Auch können so die Oberflächenstrukturen definierter ausgebildet werden und z.B. die Vertiefungen der Oberflächenstruktur noch weiter vertieft und damit die Strukturhöhe vergrößert werden.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigen:
- Fig. 1a: eine schematische und vergrößerte Darstellung einer Glasoberfläche mit einer wellenförmigen Mikrostruktur gemäß einem Ausführungsbeispiel der Erfindung;
- Fig. 1b: eine schematische Darstellung des Verlaufs der Oberflächenstruktur in einem Schnitt durch die Glasplatte entlang der in Fig. 1a eingezeichneten Schnittlinie;
- Fig. 2: eine schematische Darstellung einer diagonalen Kreuzstruktur eines Fräsmusters zum Einbringen in ein Werkzeugteil eines Tiefziehwerkzeugs zum Erzeugen einer wellenförmigen Oberflächenstruktur auf einer Glasplatte gemäß einem Ausführungsbeispiel der Erfindung;
- Fig. 3: eine schematische Darstellung eines Querschnitts durch ein rillenförmiges Fräsmuster in einem Tiefziehwerkzeugteil zur Veranschaulichung der Fräsparameter Fräsabstand und Fräsradius; und
- Fig. 4: eine schematische Darstellung einer wellenförmigen Oberflächenstruktur einer Glasplatte mit rasterförmig angeordneten Erhöhungen und Vertiefungen gemäß einem Ausführungsbeispiel der Erfindung.

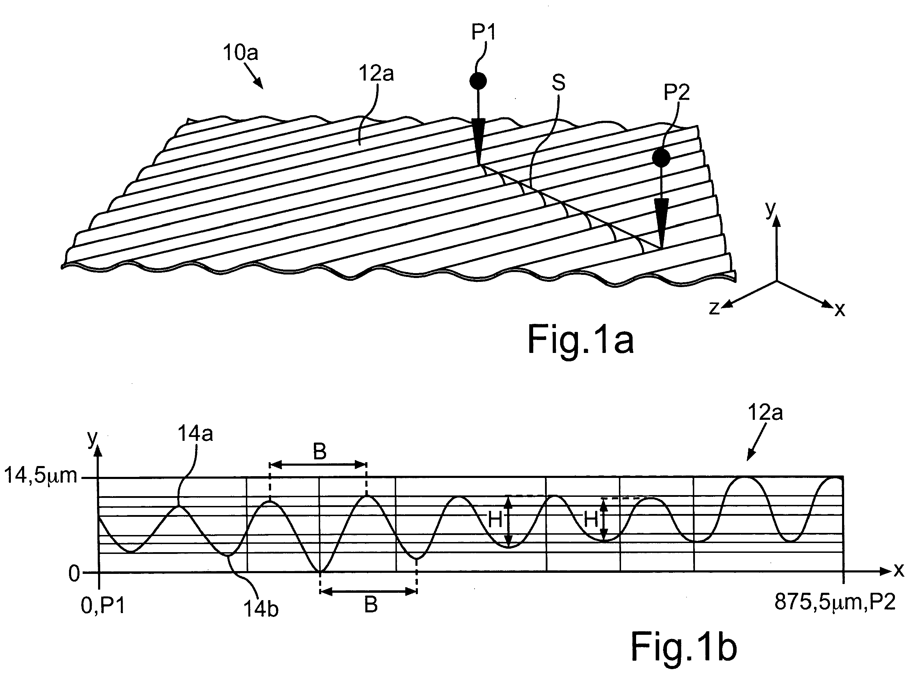

Fig. 1a zeigt eine schematische und vergrößerte Darstellung einer Glasoberfläche 10a mit einer wellenförmigen Mikrostruktur 12a gemäß einem Ausführungsbeispiel der Erfindung und Fig. 1b die Darstellung eines Verlaufs der Oberflächenstruktur 12a in einem Schnitt durch die Glasplatte entlang der in Fig. 1a eingezeichneten Schnittlinie S zwischen den Punkten P1 und P2. Diese Oberflächenstruktur 12a kann dabei durch einen Tiefziehprozess der Glasplatte erzeugt werden, indem in eines von zwei Werkzeughälften eines Tiefziehwerkzeugs, zwischen denen die Glasplatte eingelegt wird, ein Fräsmuster in Form von aneinandergrenzenden, in eine Richtung parallel verlaufenden, gleichförmigen Rillen eingebracht wird, so dass sich dieses Muster als korrespondierende Negativform auf die Glasoberfläche 10a überträgt. Dadurch kann also eine periodische Wellenstruktur 12a mit sich längserstreckenden Erhöhungen 14a und Vertiefungen 14b auf der Glasoberfläche 10a erzeugt werden. Dieses Muster 12a ist in diesem Beispiel weiterhin in seiner Längserstreckungsrichtung, hier in z-Richtung, in seiner Formgebung translationsinvariant, zumindest innerhalb eines bestimmten Toleranzbereichs gesehen, der insbesondere kleiner ist als die Strukturbreite B selbst, da eine derartig feine Struktur 12a in ihrer Formgebung zum einen zufallsbedingten Schwankungen bzw. Abweichungen unterliegt, wie der unterschiedlichen Ausformung der einzelnen Wellen in Fig. 1b zu entnehmen ist. Zum anderen können derartige Schwankungen und Unterschiede auch gezielt erzeugt werden, z.B. durch finales Ätzen der Glasoberfläche 10a mit der Oberflächenstruktur 12a, damit durch solch gezielt erzeugte Unregelmäßigkeiten die Strukturierung der Glasoberfläche 10a für einen Benutzer nicht oder deutlich weniger stark erfühlbar ist, was ein angenehmeres Bedienempfinden hervorruft.

Wie die Skala der x-Achse in Fig. 1b weiterhin zeigt, befinden sich die Punkte P1 und P2 in einem Abstand von 875,5 µm. Die Wellenlängen dieser Struktur, hier bezeichnet als die Strukturbreite B, bemessen am Abstand zwischen zwei Vertiefungen 14b bzw. Erhöhungen 14a in Richtung, hier x-Richtung, senkrecht zur Längserstreckung, hier in z-Richtung, der Vertiefungen 14b bzw. Erhöhungen 14a, also insbesondere die in Fig. 1b dargestellten Abstände zwischen je zwei benachbarten Minima bzw. Maxima, liegen dabei bevorzugt im Bereich zwischen 80 µm und 130 µm und messen in diesem Beispiel zwischen 96 µm und 120 µm. Die Strukturhöhe H, die ebenfalls gewissen Schwankungen unterliegt, liegt dabei bevorzugt im Bereich zwischen 5 µm und 20 µm. Prinzipiell lassen sich auch Strukturen mit deutlich kleineren Abmessungen oder größeren Abmessungen realisieren. Durch eine Mikrostruktur 12a mit diesen Abmessungen lassen sich jedoch besonders große Vorteile in Bezug auf Haptik, Bedienempfinden, Optik, Akustik, die thermischen Eigenschaften der Glasplatte, Gleiteigenschaften auf der Oberfläche, und damit allgemein auf die Bedien- und Benutzungsfreundlichkeit des Bedienelements an sich erzielen.

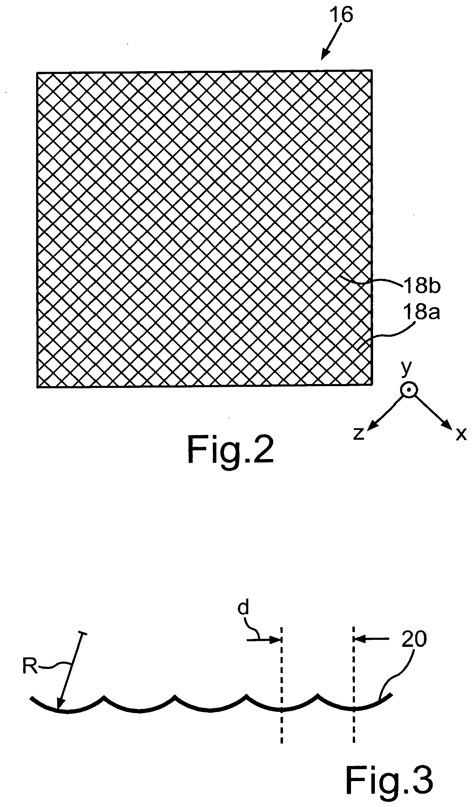

Um diese Eigenschaften noch zu Optimieren und in besonders homogener Weise über die gesamte Glasoberfläche 10b bereitzustellen, kann eine diagonale Kreuzstruktur 16 vorgesehen werden, wie in Fig. 2 schematisch dargestellt. Insbesondere ist hier in schematischer Weise ein Fräsmuster dargestellt, das in ein Werkzeugteil des Tiefziehwerkzeugs eingebracht werden kann. Dieses Fräsmuster weist in eine erste Richtung, hier x-Richtung, verlaufende erste Rillen 18a und senkrecht zu diesen, hier in z-Richtung, verlaufende zweite Rillen 18b auf, die bevorzugt hinsichtlich ihrer Breite, die zum Fräsabstand d (vgl. Fig. 3) korrespondiert und ihrer Tiefe, die durch einen bestimmten Fräsradius R (vgl. Fig. 3) vorgebbar ist, gleichartig ausgebildet sind. Fig. 3 zeigt dazu eine Veranschaulichung dieser Fräsparameter anhand einer schematischen Darstellung eines Querschnitts durch ein rillenförmiges Fräsmuster 20 in einem Tiefziehwerkzeugteil.

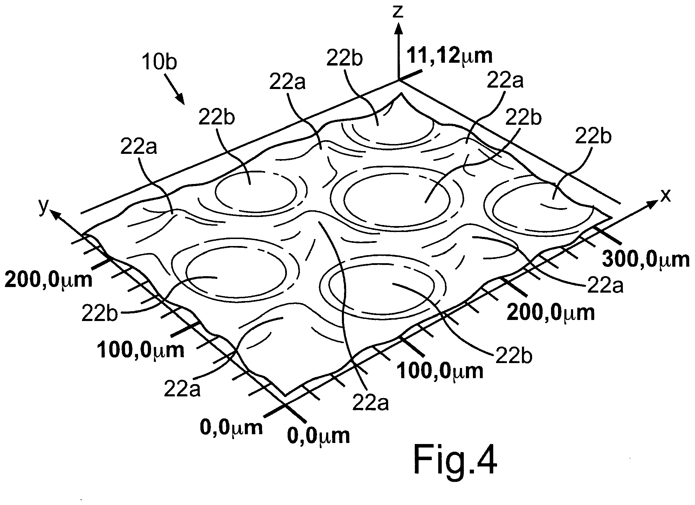

Durch ein Fräsmuster mit einer Kreuzstruktur 16, wie in Fig. 2 dargestellt, kann auf einer Glasoberfläche 10b durch Tiefziehen und insbesondere durch einen darauffolgenden Ätzprozess eine Oberflächenstruktur 12b erzeugt werden, wie in Fig. 4 dargestellt. Fig. 4 zeigt dabei eine schematische Darstellung einer wellenförmigen Oberflächenstruktur 12b einer Glasplatte mit rasterförmig angeordneten Erhöhungen 22a und Vertiefungen 22b. Insbesondere sind die Erhöhungen und Vertiefungen hierbei so angeordnet, dass je vier Erhöhungen 22a eine Vertiefung 22b umgeben und umgekehrt. Die durch das Kanten aufweisende Fräsmuster beim Tiefziehen evtl. entstehenden kantigen Vertiefungen 22b können durch finales Ätzen abgerundet werden und so ein besonders kantenfreier und kontinuierlicher Verlauf der Wellenstruktur 12b erzeugt werden.

Dadurch kann insgesamt ein Bedienelement, insbesondere ein Touchpad oder ein Touchscreen bereitgestellt werden, das eine für Touch-Bedienung optimierte Oberfläche in Bezug auf Gleitfähigkeit, Sichtbarkeit von Verschmutzungen, Gleitgeräuschen und einer scharfen und klaren Erkennbarkeit von durch die Glasplatte angezeigten Darstellungen, wie Symbolen für verschiedene Funktionen des Bedienelements, aufweist, und zudem auf besonders einfache und kostengünstige Weise erzeugbar ist.

## Patentansprüche

1. Bedienelement für ein Kraftfahrzeug, wobei das Bedienelement eine berührsensitive Bedienoberfläche aufweist, die durch eine Oberfläche (10a; 10b) einer Glasplatte bereitgestellt ist, wobei die Oberfläche (10a; 10b) der Glasplatte eine Oberflächenstruktur (12a; 12b) aufweist, die durch Tiefziehen der Oberfläche (10a; 10b) im erwärmten Zustand der Glasplatte ausgebildet ist,
**dadurch gekennzeichnet, dass**
die Oberflächenstruktur (12a; 12b) wellenförmig ausgebildet ist und zumindest ein gesamter berührbarer Teil der Oberfläche (10a; 10b) der Glasplatte mit der Oberflächenstruktur (12a; 12b) ausgebildet ist, wobei die Oberflächenstruktur (12a; 12b) als Mikrostruktur ausgebildet ist, wobei die Oberflächenstruktur (12a; 12b) Erhöhungen (14a; 22a) und Vertiefungen (14b; 22b) aufweist, wobei der Abstand zwischen jeweils zwei nächstliegenden Erhöhungen (14a; 22a) und zwischen jeweils zwei nächstliegenden Vertiefungen (14b; 22b) jeweils zwischen 80 und 130 Mikrometern bemisst, wobei die Oberflächenstruktur (12a; 12b) derart ausgebildet ist, dass die Strukturhöhe (H) zwischen 5 und 20 Mikrometer bemisst.

2. Bedienelement nach Anspruch 1,
**dadurch gekennzeichnet, dass**
die Erhöhungen (14a) und Vertiefungen (14b) jeweils langgestreckt in einer Längserstreckungsrichtung (z) ausgebildet sind, insbesondere so dass Höhenlinien der Oberflächenstruktur (12a) zum Großteil in eine gleiche Richtung (z) verlaufen.

3. Bedienelement nach Anspruch 1 oder 2,
**dadurch gekennzeichnet, dass**
die Erhöhungen (22a) und Vertiefungen (22b) rasterförmig angeordnet sind, so dass eine Erhöhung (22a) von vier Vertiefungen (22b) umgeben ist und umgekehrt, insbesondere so, dass Höhenlinien der Oberflächenstruktur (12b) zum Großteil in einer geschlossen Linie verlaufen.

4. Verfahren zum Herstellen einer Glasplatte eines berührsensitiven Bedienelements für ein Kraftfahrzeug, mit den Schritten:
a) Bereitstellen einer Glasplatte;
b) Bereitstellen eines Tiefziehwerkzeugs mit einem ersten Werkzeugteil und einem zweiten Werkzeugteil;
c) Einbringen der Glasplatte in das Tiefziehwerkzeug zwischen das erste Werkzeugteil und das zweite Werkzeugteil; und
d) Ausbilden einer Oberflächenstruktur (12a; 12b) einer ersten Oberfläche (10a; 10b) der Glasplatte durch Tiefziehen der Glasplatte im erwärmten Zustand der Glasplatte mittels des Tiefziehwerkzeugs, wobei die erste Oberfläche der Glasplatte eine berührsensitive Bedienoberfläche des Bedienelements zur Bedienung des Bedienelements bereitstellt;
**dadurch gekennzeichnet, dass**
in Schritt b) ein Tiefziehwerkzeug bereitgestellt wird, dessen erster Werkzeugteil ein Muster (16; 20) aufweist, das zumindest durch Einbringen von mehreren, rillenförmigen ersten Vertiefungen (18a) gebildet ist, und die Glasplatte in Schritt c) derart in das Tiefziehwerkzeug eingebracht wird, dass beim Tiefziehen der Glasplatte das Muster (16; 20) als eine wellenförmige Oberflächenstruktur (12a; 12b) auf die erste Oberfläche (10a; 10b) der Glasplatte übertragen wird, wobei Oberflächenstruktur (12a; 12b) als Mikrostruktur ausgebildet ist, wobei die Oberflächenstruktur (12a; 12b) Erhöhungen (14a; 22a) und Vertiefungen (14b; 22b) aufweist, wobei der Abstand zwischen jeweils zwei nächstliegenden Erhöhungen (14a; 22a) und zwischen jeweils zwei nächstliegenden Vertiefungen (14b; 22b) jeweils zwischen 80 und 130 Mikrometern bemisst, und wobei die Oberflächenstruktur (12a; 12b) derart ausgebildet ist, dass die Strukturhöhe (H) zwischen 5 und 20 Mikrometer bemisst.

5. Verfahren nach Anspruch 4,
**dadurch gekennzeichnet, dass**
die ersten Vertiefungen (18a) in eine erste Richtung (x) verlaufend in den ersten Werkzeugteil und in einer zweiten Richtung (z) senkrecht zur ersten Richtung (x) aneinandergrenzend eingebracht sind, wobei eine jeweilige erste Vertiefung (18a) in der zweiten Richtung (z) eine Breite aufweist, die kleiner ist als 130 Mikrometer.

6. Verfahren nach einem der Ansprüche 4 oder 5,
**dadurch gekennzeichnet, dass**
das Muster (16) des ersten Werkzeugteils zusätzlich durch Einbringen mehrerer in einer dritten Richtung (z) verlaufenden, rillenförmigen zweiten Vertiefungen (18b) gebildet ist, wobei die dritte Richtung (z) in einem Winkel ungleich Null, und bevorzugt senkrecht, zur ersten Richtung (x) verläuft.

7. Verfahren nach einem der Ansprüche 4 bis 6,
**dadurch gekennzeichnet, dass**
das Tiefziehen derart erfolgt, dass eine der ersten Oberfläche (10a; 10b) gegenüberliegende zweite Oberfläche der Glasplatte eben ausgebildet wird.

## Claims

1. Operating element for a motor vehicle, wherein the operating element has a touch-sensitive user interface that is provided by a surface (10a; 10b) of a glass plate, wherein the surface (10a; 10b) of the glass plate has a surface structure (12a; 12b) formed by deep-drawing the surface (10a; 10b) in the heated state of the glass plate,
**characterised in that**,
the surface structure (12a; 12b) is wave-shaped in design and at least an entire touchable part of the surface (10a; 10b) of the glass plate is formed with the surface structure (12a; 12b), wherein the surface structure (12a; 12b) is formed as a microstructure, wherein the surface structure (12a; 12b) has elevations (14a; 22a) and depressions (14b; 22b), wherein the distance between in each case two nearest elevations (14a; 22a) and between in each case two nearest depressions (14b; 22b) is between 80 and 130 micrometres, wherein the surface structure (12a; 12b) is formed such that the structure height (H) measures between 5 and 20 micrometres.

2. Operating element according to claim 1,
**characterised in that**,
the elevations (14a) and depressions (14b) are in each case elongated in a longitudinal extension direction (z), in particular so that contour lines of the surface structure (12a) run largely in the same direction (z).

3. Operating element according to claim 1 or 2,
**characterised in that**,
**in that** the elevations (22a) and depressions (22b) are disposed grid-shape such that an elevation (22a) is surrounded by four depressions (22b) and vice versa, in particular such that contour lines of the surface structure (12b) largely run in a closed line.

4. Method for manufacturing a glass plate of a touch-sensitive control element for a motor vehicle, comprising the steps:
a) providing a glass plate;
b) providing a deep-drawing tool having a first tool part and a second tool part;
c) inserting the glass plate into the deep-drawing tool between the first tool part and the second tool part; and
d) forming a surface structure (12a; 12b) of a first surface (10a; 10b) of the glass plate by deep drawing the glass plate in the heated state of said glass plate by means of the deep-drawing tool, wherein the first surface of the glass plate provides a touch-sensitive control surface of the operating element for operating the operating element;
**characterised in that**,
in step b) a deep-drawing tool is provided, by which the first tool part has a pattern (16; 20), that is formed at least by introducing a plurality of groove-shaped first recesses (18a) and the glass plate is introduced into the deep-drawing tool in step c) **in that**, when deep-drawing the glass plate, the pattern (16; 20) as a wave-shaped surface structure (12a; 12b) is transferred to the first surface (10a; 10b) of the glass plate, wherein surface structure (12a; 12b) is formed as a microstructure, wherein the surface structure (12a; 12b) has elevations (14a; 22a) and depressions (14b; 22b), wherein the distance in each case between two nearest elevations (14a; 22a) and in each case between two nearest depressions (14b; 22b) respectively measures between 80 and 130 micrometres, and wherein the surface structure (12a, 12b) is formed such that the structural height (H) measures between 5 and 20 micrometres.

5. Method according to claim 4,
**characterised in that**,
the first recesses (18a) are introduced in a first direction (x) extending into the first tool part and in a second direction (z) perpendicular to the first direction (x) are adjoining one another, wherein a respective first recess (18a) in the second direction (z) has a width that is less than 130 micrometres.

6. Method according to one of claims 4 or 5,
**characterised in that**,
the pattern (16) of the first tool part is additionally formed by introducing a plurality of groove-like second depressions (18b) extending in a third direction (z), wherein the third direction (z) extends at a non-zero angle, and preferably perpendicularly to the first direction (x).

7. Method according to one of claims 4 to 6,
**characterised in that**,
the deep-drawing takes place in such a way that a second surface of the glass plate opposite the first surface (10a; 10b) is formed flat.

## Revendications

1. Élément de commande pour un véhicule automobile, dans lequel l'élément de commande présente une surface de commande tactile qui est prévue par une surface (10a ; 10b) d'une plaque de verre, dans lequel la surface (10a ; 10b) de la plaque de verre présente une structure de surface (12a ; 12b) réalisée par emboutissage de la surface (10a ; 10b) lorsque la plaque de verre est chauffée,
**caractérisé en ce que** la structure de surface (12a ; 12b) est réalisée ondulée et au moins toute une partie pouvant être touchée de la surface (10a ; 10b) de la plaque de verre est réalisée avec la structure de surface (12a ; 12b), dans lequel la structure de surface (12a ; 12b) est réalisée comme une microstructure, dans lequel la structure de surface (12a ; 12b) présente des bosses (14a ; 22a) et des creux (14b ; 22b), dans lequel la distance entre deux bosses (14a ; 22a) respectivement voisines et entre deux creux (14b ; 22b) respectivement voisins mesure chacun entre 80 et 130 micromètres, dans lequel la structure de surface (12a ; 12b) est réalisée de telle sorte que la hauteur de structure (H) mesure entre 5 et 20 micromètres.

2. Élément de commande selon la revendication 1, **caractérisé en ce que**
les bosses (14a) et les creux (14b) sont réalisés chacun allongés dans une direction d'extension longitudinale (z), en particulier de telle sorte que des lignes de niveau de la structure de surface (12a) s'étendent en grande partie dans une même direction (z).

3. Élément de commande selon la revendication 1 ou 2, **caractérisé en ce que**
les bosses (22a) et les creux (22b) sont disposés en forme de trames de telle sorte qu'une bosse (22a) est entourée par quatre creux (22b) et inversement, en particulier de telle sorte que des lignes de niveau de la structure de surface (12b) s'étendent en grande partie dans une ligne fermée.

4. Procédé de fabrication d'une plaque de verre d'un élément de commande tactile pour un véhicule automobile, avec les étapes :
a) préparation d'une plaque de verre ;
b) préparation d'un outil d'emboutissage avec une première partie d'outil et avec une deuxième partie d'outil ;
c) mise en place de la plaque de verre dans l'outil d'emboutissage entre la première partie d'outil et la deuxième partie d'outil ; et
d) réalisation d'une structure de surface (12a ; 12b) d'une première surface (10a ; 10b) de la plaque de verre par emboutissage de la plaque de verre au moyen de l'outil d'emboutissage lorsque la plaque de verre est chauffée, la première surface de la plaque de verre fournissant une surface de commande tactile de l'élément de commande dans le but de commander l'élément de commande ;
**caractérisé en ce que**,
à l'étape b), il est prévu un outil d'emboutissage dont la première partie d'outil présente un motif (16; 20) qui est formé au moins par la mise en place de plusieurs premiers creux (18a) en forme de rainures et la plaque de verre à l'étape c) est mise en place de telle sorte dans l'outil d'emboutissage que, lors de l'emboutissage de la plaque de verre, le motif (16 ; 20) est transféré comme une structure de surface ondulée (12a ; 12b) sur la première surface (10a ; 10b) de la plaque de verre, la structure de surface (12a ; 12b) étant réalisée comme une microstructure, la structure de surface (12a ; 12b) comportant des bosses (14a ; 22a) et des creux (14b ; 22b), la distance entre deux bosses (14a ; 22a) respectivement voisines et entre deux creux (14b ; 22b) respectivement voisins mesurant chacun entre 80 et 130 micromètres et la structure de surface (12a ; 12b) étant réalisée de telle sorte que la hauteur de structure (H) mesure entre 5 et 20 micromètres.

5. Procédé selon la revendication 4, **caractérisé en ce que**
les premiers creux (18a) sont mis en place adjacents les uns aux autres de manière à s'étendre dans une première direction (x) dans la première partie d'outil et dans une deuxième direction (z) perpendiculaire à la première direction (x), un premier creux (18a) respectif présentant dans la deuxième direction (z) une largeur qui est inférieure à 130 micromètres.

6. Procédé selon l'une quelconque des revendications 4 ou 5, **caractérisé en ce que**
le motif (16) de la première partie d'outil est formé en outre par mise en place de plusieurs deuxièmes creux (18b) en forme de rainures s'étendant dans une troisième direction (z), la troisième direction (z) s'étendant avec un angle différent de zéro, et de préférence perpendiculairement, par rapport à la première direction (x).

7. Procédé selon l'une quelconque des revendications 4 à 6, **caractérisé en ce que**
l'emboutissage s'effectue de telle sorte qu'une deuxième surface, à l'opposé de la première surface (10a ; 10b), de la plaque de verre est réalisée plane.
